# EUROPEAN PATENT APPLICATION

(11) **EP 4 258 667 A1**
(43) Date of publication of application: **11.10.2023**
(21) Application number: 21901021.2
(22) Date of filing: 02.12.2021
(51) Int. Cl.: H04N 19/563, H04N 19/577, H04N 19/176, G06T 9/00, G06T 3/40, G06N 3/08, G06N 3/04

(54) **VIDEO CODEC USING BLOCK-BASED DEEP LEARNING MODEL**

(30) Priority: 02.12.2020 KR 20200166450
(71) Applicant: HYUNDAI MOTOR COMPANY, Seoul 06797 (KR); Kia Corporation, Seocho-gu Seoul 06797 (KR); Ewha University-Industry Collaboration Foundation, Seoul 03760 (KR)
(72) Inventor: KANG, Je Won, Seoul 04069 (KR); PARK, Seung Wook, Yongin-si Gyeonggi-do 16803 (KR)
(74) Representative: Isarpatent
(86) International application number: PCT/KR2021/018073
(87) International publication number: WO 2022/119333

(57) **Abstract**

A video codec uses a block-based deep learning model. The video codec, when processing video blocks by using a deep learning model, generates a super block by stacking or packing the respective ones of YUV video blocks and inputs the generated super block to the deep learning model. The video codec processes the inputs differently in the course of performing convolution within the deep learning model, according to the characteristics of the constituent YUV blocks of the super block

## Description

### [Technical Field]

The present disclosure relates to a video codec using a block-based deep learning model.

### [Background]

The statements in this section merely provide background information related to the present disclosure and do not necessarily constitute prior art.

Since video data has a large amount of data compared to audio or still image data, the video data requires a lot of hardware resources, including memory, to store or transmit the video data without processing for compression.

Accordingly, an encoder is generally used to compress and store or transmit video data. A decoder receives the compressed video data, decompresses the received compressed video data, and plays the decompressed video data. Video compression techniques include H.264/AVC, High Efficiency Video Coding (HEVC), and Versatile Video Coding (VVC), which has improved coding efficiency by about 30% or more compared to HEVC.

However, since the image size, resolution, and frame rate gradually increase, the amount of data to be encoded also increases. Accordingly, a new compression technique providing higher coding efficiency and an improved image enhancement effect than existing compression techniques is required.

Recently, deep learning-based image processing techniques have been applied to existing encoding elemental technologies. Encoding efficiency can be improved by applying deep learning-based image processing techniques to existing encoding techniques, in particular, such compression techniques as inter prediction, intra prediction, in-loop filter, transform, etc. Representative application examples include inter prediction based on virtual reference frames generated by deep learning models and includes in-loop filter based on denoising models. Therefore, deep learning-based image processing technology needs to be employed further to improve the coding efficiency in image encoding/decoding.

### [Disclosure]

### [Technical Problem]

The present disclosure in some embodiments seeks to provide a video codec that, when processing video blocks by using a deep learning model, generates a super block by stacking or packing the respective ones of YUV video blocks, and inputs the generated super block to the deep learning model. The video codec processes the inputs differently in the course of performing convolution within the deep learning model, according to the characteristics of the constituent YUV blocks of the super block.

### [Technical Solution]

At least one aspect of the present disclosure provides a method performed by a computing device for processing a video block based on a deep learning technology. The method includes obtaining a video input block that includes a Y block, a U block, and a V block, which respectively have a Y signal, a U signal, and a V signal in a 4:2:0 or 4:4:4 format of sampling rate. The method also includes generating an input block by stacking or combining the Y block, the U block, and the V block. The method also includes inputting the input block to at least one deep learning model. The method also includes generating an output block from the input block by performing a convolutional operation based on at least one or more deep learning models. The method also includes generating a video output block from the output block.

Another aspect of the present disclosure provides an apparatus for processing a video block based on a deep learning technology. The apparatus for processing a video block includes an input unit configured to obtain a video input block and to generate an input block by stacking or combining a Y block, a U block, and a V block that are included in the video input block and respectively have a Y signal, a U signal, and a V signal in a 4:2:0 or 4:4:4 format of sampling rate. The apparatus for processing a video block also includes a conversion unit configured to generate an output block from the input block by performing a convolutional operation based on at least one or more deep learning models. The apparatus for processing a video block also includes an output unit configured to generate a video output block from the output block.

### [Advantageous Effects]

As described above, the present disclosure provides a video codec that generates a super block by stacking or packing the respective ones of YUV video blocks and inputs the generated super block to a deep learning model. The video codec processes the inputs differently in the course of performing convolution within the deep learning model, according to the characteristics of the constituent YUV blocks of the super block, to improve the coding efficiency and reduce the complexity and memory requirements.

### [Brief Description of the Drawings]

FIG. 1 is a block diagram of a video encoding apparatus that may implement the techniques of the present disclosure.
FIG. 2 illustrates a method for partitioning a block using a quadtree plus binarytree ternary tree (QTBTTT) structure.
FIGS. 3A and 3B illustrate a plurality of intra prediction modes including wide-angle intra prediction modes.
FIG. 4 illustrates neighboring blocks of a current block.
FIG. 5 is a block diagram of a video decoding apparatus that may implement the techniques of the present disclosure.
FIG. 6 is a diagram illustrating the operation of a convolutional layer according to at least one embodiment of the present disclosure.
FIG. 7 is a diagram illustrating the operation of a deconvolution layer according to at least one embodiment of the present disclosure.
FIG. 8 is a diagram illustrating the operation of a pooling layer according to at least one embodiment of the present disclosure.
FIG. 9 is a block diagram conceptually illustrating a video block processing device according to at least one embodiment of the present disclosure.
FIG. 10 is a diagram illustrating a method of constructing an input block of a deep learning model, according to at least one embodiment of the present disclosure.
FIG. 11 is a diagram illustrating a method of enlarging a U block when constructing an input block, according to at least one embodiment of the present disclosure.
FIG. 12 is a diagram illustrating a method of constructing an input block of a deep learning model, according to another embodiment of the present disclosure.
FIG. 13 is a diagram of a method of quadrisecting a Y block, according to another embodiment of the present disclosure.
FIG. 14 is a diagram illustrating a method of constructing an input block of a deep learning model, according to another embodiment of the present disclosure.
FIG. 15 is a diagram illustrating a method of constructing a super block when constructing an input block, according to another embodiment of the present disclosure.
FIG. 16 is a diagram illustrating a method of constructing a super block by using Y, U, and V blocks, according to another embodiment of the present disclosure.
FIG. 17 is a diagram illustrating a method of constructing a superblock by using Y, U, and V blocks, according to yet another embodiment of the present disclosure.
FIG. 18 is a diagram illustrating a method of using a block partitioning structure as input to a deep learning model, according to another embodiment of the present disclosure.
FIG. 19 is a diagram illustrating a method of using a block partitioning structure as a branch input to a deep learning model, according to another embodiment of the present disclosure.
FIG. 20 is a diagram illustrating a method of using an encoded map as a branch input to a deep learning model, according to another embodiment of the present disclosure.
FIG. 21 is a flowchart of a method of processing a video block, according to at least one embodiment of the present disclosure.

### [Detailed Description]

Hereinafter, some embodiments of the present disclosure are described in detail with reference to the accompanying illustrative drawings. In the following description, like reference numerals designate like elements, although the elements are shown in different drawings. Further, in the following description of some embodiments, detailed descriptions of related known components and functions when considered to obscure the subject of the present disclosure may be omitted for the purpose of clarity and for brevity.

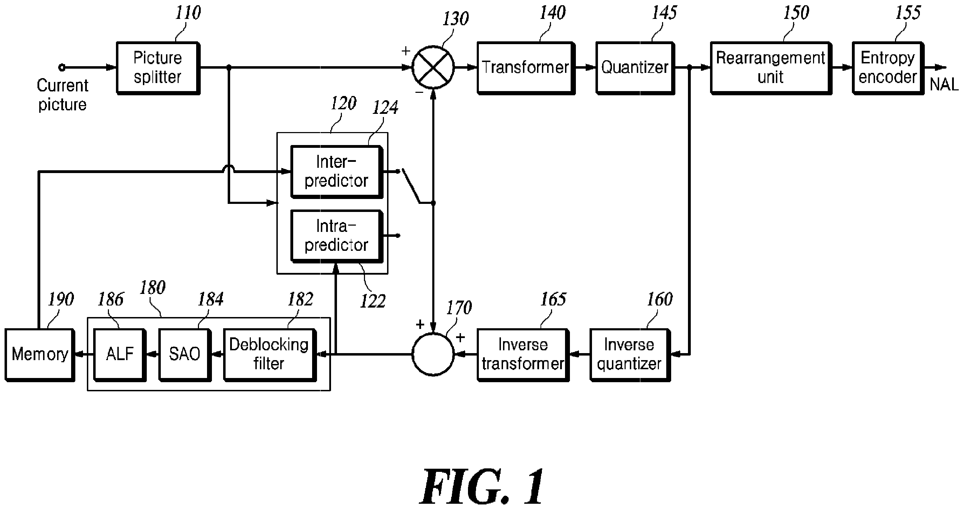

FIG. 1 is a block diagram of a video encoding apparatus that may implement technologies of the present disclosure. Hereinafter, referring to illustration of FIG. 1, the video encoding apparatus and components of the apparatus are described.

The encoding apparatus may include a picture splitter 110, a predictor 120, a subtractor 130, a transformer 140, a quantizer 145, a rearrangement unit 150, an entropy encoder 155, an inverse quantizer 160, an inverse transformer 165, an adder 170, a loop filter unit 180, and a memory 190.

Each component of the encoding apparatus may be implemented as hardware or software or implemented as a combination of hardware and software. Further, a function of each component may be implemented as software, and a microprocessor may also be implemented to execute the function of the software corresponding to each component.

One video is constituted by one or more sequences including a plurality of pictures. Each picture is split into a plurality of areas, and encoding is performed for each area. For example, one picture is split into one or more tiles or/and slices. Here, one or more tiles may be defined as a tile group. Each tile or/and slice is split into one or more coding tree units (CTUs). In addition, each CTU is split into one or more coding units (CUs) by a tree structure. Information applied to each CU is encoded as a syntax of the CU and information commonly applied to the CUs included in one CTU is encoded as the syntax of the CTU. Further, information commonly applied to all blocks in one slice is encoded as the syntax of a slice header, and information applied to all blocks constituting one or more pictures is encoded to a picture parameter set (PPS) or a picture header. Furthermore, information, which the plurality of pictures commonly refers to, is encoded to a sequence parameter set (SPS). In addition, information, which one or more SPS commonly refer to, is encoded to a video parameter set (VPS). Further, information commonly applied to one tile or tile group may also be encoded as the syntax of a tile or tile group header. The syntaxes included in the SPS, the PPS, the slice header, the tile, or the tile group header may be referred to as a high level syntax.

The picture splitter 110 determines a size of CTU. Information on the size of the CTU (CTU size) is encoded as the syntax of the SPS or the PPS and delivered to a video decoding apparatus.

The picture splitter 110 splits each picture constituting the video into a plurality of CTUs having a predetermined size and then recursively splits the CTU by using a tree structure. A leaf node in the tree structure becomes the CU, which is a basic unit of encoding.

The tree structure may be a quadtree (QT) in which a higher node (or a parent node) is split into four lower nodes (or child nodes) having the same size. The tree structure may also be a binarytree (BT) in which the higher node is split into two lower nodes. The tree structure may also be a ternary tree (TT) in which the higher node is split into three lower nodes at a ratio of 1:2:1. The tree structure may also be a structure in which two or more structures among the QT structure, the BT structure, and the TT structure are mixed. For example, a quadtree plus binarytree (QTBT) structure may be used or a quadtree plus binarytree ternary tree (QTBTTT) structure may be used. Here, a BTTT is added to the tree structures to be referred to as a multiple-type tree (MTT).

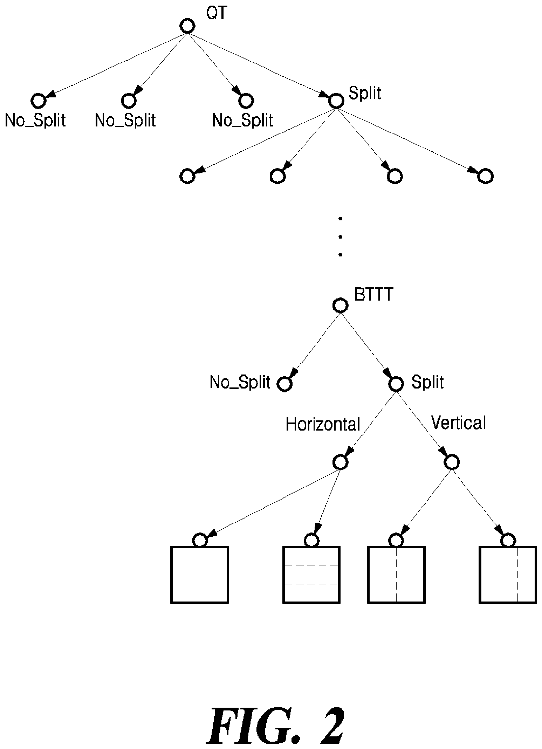

FIG. 2 is a diagram for describing a method for splitting a block by using a QTBTTT structure.

As illustrated in FIG. 2, the CTU may first be split into the QT structure. Quadtree splitting may be recursive until the size of a splitting block reaches a minimum block size (MinQTSize) of the leaf node permitted in the QT. A first flag (QT_split_flag) indicating whether each node of the QT structure is split into four nodes of a lower layer is encoded by the entropy encoder 155 and signaled to the video decoding apparatus. When the leaf node of the QT is not larger than a maximum block size (MaxBTSize) of a root node permitted in the BT, the leaf node may be further split into at least one of the BT structure or the TT structure. A plurality of split directions may be present in the BT structure and/or the TT structure. For example, there may be two directions, i.e., a direction in which the block of the corresponding node is split horizontally and a direction in which the block of the corresponding node is split vertically. As illustrated in FIG. 2, when the MTT splitting starts, a second flag (mtt_split_flag) indicating whether the nodes are split, and a flag additionally indicating the split direction (vertical or horizontal), and/or a flag indicating a split type (binary or ternary) if the nodes are split are encoded by the entropy encoder 155 and signaled to the video decoding apparatus.

Alternatively, prior to encoding the first flag (QT_split_flag) indicating whether each node is split into four nodes of the lower layer, a CU split flag (split_cu_flag) indicating whether the node is split may also be encoded. When a value of the CU split flag (split_cu_flag) indicates that each node is not split, the block of the corresponding node becomes the leaf node in the split tree structure and becomes the CU, which is the basic unit of encoding. When the value of the CU split flag (split_cu_flag) indicates that each node is split, the video encoding apparatus starts encoding the first flag first by the above-described scheme.

When the QTBT is used as another example of the tree structure, there may be two types, i.e., a type (i.e., symmetric horizontal splitting) in which the block of the corresponding node is horizontally split into two blocks having the same size and a type (i.e., symmetric vertical splitting) in which the block of the corresponding node is vertically split into two blocks having the same size. A split flag (split_flag) indicating whether each node of the BT structure is split into the block of the lower layer and split type information indicating a splitting type are encoded by the entropy encoder 155 and delivered to the video decoding apparatus. Meanwhile, a type in which the block of the corresponding node is split into two blocks of a form of being asymmetrical to each other may be additionally present. The asymmetrical form may include a form in which the block of the corresponding node split into two rectangular blocks having a size ratio of 1:3 or may also include a form in which the block of the corresponding node is split in a diagonal direction.

The CU may have various sizes according to QTBT or QTBTTT splitting from the CTU. Hereinafter, a block corresponding to a CU (i.e., the leaf node of the QTBTTT) to be encoded or decoded is referred to as a "current block". As the QTBTTT splitting is adopted, a shape of the current block may also be a rectangular shape in addition to a square shape.

The predictor 120 predicts the current block to generate a prediction block. The predictor 120 includes an intra predictor 122 and an inter predictor 124.

In general, each of the current blocks in the picture may be predictively coded. In general, the prediction of the current block may be performed by using an intra prediction technology (using data from the picture including the current block) or an inter prediction technology (using data from a picture coded before the picture including the current block). The inter prediction includes both unidirectional prediction and bidirectional prediction.

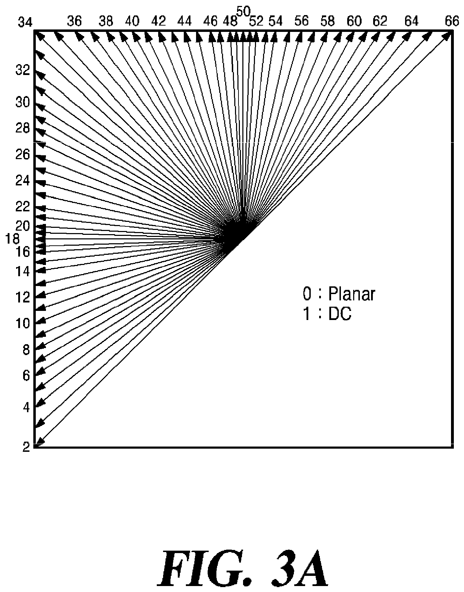

The intra predictor 122 predicts pixels in the current block by using pixels (reference pixels) positioned on a neighbor of the current block in the current picture including the current block. There is a plurality of intra prediction modes according to the prediction direction. For example, as illustrated in FIG. 3A, the plurality of intra prediction modes may include 2 nondirectional modes including a Planar mode and a DC mode and may include 65 directional modes. A neighboring pixel and an arithmetic equation to be used are defined differently according to each prediction mode.

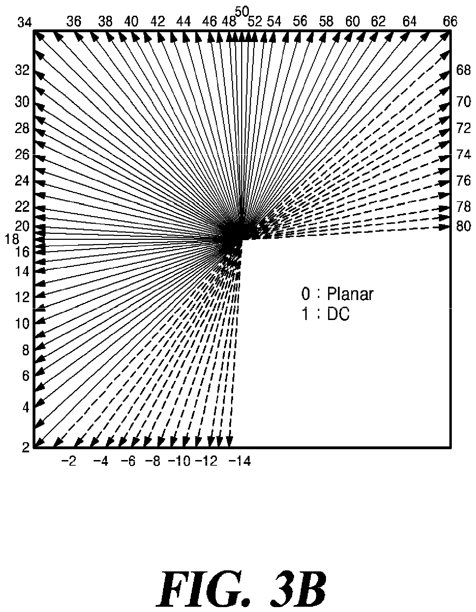

For efficient directional prediction for the current block having the rectangular shape, directional modes (#67 to #80, intra prediction modes #-1 to #-14) illustrated as dotted arrows in FIG. 3B may be additionally used. The directional modes may be referred to as "wide angle intra-prediction modes". In FIG. 3B, the arrows indicate corresponding reference samples used for the prediction and do not represent the prediction directions. The prediction direction is opposite to a direction indicated by the arrow. When the current block has the rectangular shape, the wide angle intra-prediction modes are modes in which the prediction is performed in an opposite direction to a specific directional mode without additional bit transmission. In this case, among the wide angle intra-prediction modes, some wide angle intra-prediction modes usable for the current block may be determined by a ratio of a width and a height of the current block having the rectangular shape. For example, when the current block has a rectangular shape in which the height is smaller than the width, wide angle intra-prediction modes (intra prediction modes #67 to #80) having an angle smaller than 45 degrees are usable. When the current block has a rectangular shape in which the width is larger than the height, the wide angle intra-prediction modes having an angle larger than -135 degrees are usable.

The intra predictor 122 may determine an intra prediction to be used for encoding the current block. In some examples, the intra predictor 122 may encode the current block by using multiple intra prediction modes and also select an appropriate intra prediction mode to be used from tested modes. For example, the intra predictor 122 may calculate rate-distortion values by using a rate-distortion analysis for multiple tested intra prediction modes and also select an intra prediction mode having best rate-distortion features among the tested modes.

The intra predictor 122 selects one intra prediction mode among a plurality of intra prediction modes and predicts the current block by using a neighboring pixel (reference pixel) and an arithmetic equation determined according to the selected intra prediction mode. Information on the selected intra prediction mode is encoded by the entropy encoder 155 and delivered to the video decoding apparatus.

The inter predictor 124 generates the prediction block for the current block by using a motion compensation process. The inter predictor 124 searches a block most similar to the current block in a reference picture encoded and decoded earlier than the current picture and generates the prediction block for the current block by using the searched block. In addition, a motion vector (MV) is generated, which corresponds to a displacement between the current bock in the current picture and the prediction block in the reference picture. In general, motion estimation is performed for a luma component, and a motion vector calculated based on the luma component is used for both the luma component and a chroma component. Motion information including information the reference picture and information on the motion vector used for predicting the current block is encoded by the entropy encoder 155 and delivered to the video decoding apparatus.

The inter predictor 124 may also perform interpolation for the reference picture or a reference block in order to increase accuracy of the prediction. In other words, sub-samples between two contiguous integer samples are interpolated by applying filter coefficients to a plurality of contiguous integer samples including two integer samples. When a process of searching a block most similar to the current block is performed for the interpolated reference picture, not integer sample unit precision but decimal unit precision may be expressed for the motion vector. Precision or resolution of the motion vector may be set differently for each target area to be encoded, e.g., a unit such as the slice, the tile, the CTU, the CU, etc. When such an adaptive motion vector resolution (AMVR) is applied, information on the motion vector resolution to be applied to each target area should be signaled for each target area. For example, when the target area is the CU, the information on the motion vector resolution applied for each CU is signaled. The information on the motion vector resolution may be information representing precision of a motion vector difference to be described below.

Meanwhile, the inter predictor 124 may perform inter prediction by using bi-prediction. In the case of the bi-prediction, two reference pictures and two motion vectors representing a block position most similar to the current block in each reference picture are used. The inter predictor 124 selects a first reference picture and a second reference picture from reference picture list 0 (RefPicList0) and reference picture list 1 (RefPicList1), respectively. The inter predictor 124 also searches blocks most similar to the current blocks in the respective reference pictures to generate a first reference block and a second reference block. In addition, the prediction block for the current block is generated by averaging or weighted-averaging the first reference block and the second reference block. In addition, motion information including information on two reference pictures used for predicting the current block and information on two motion vectors is delivered to the entropy encoder 155. Here, reference picture list 0 may be constituted by pictures before the current picture in a display order among pre-restored pictures, and reference picture list 1 may be constituted by pictures after the current picture in the display order among the pre-restored pictures. However, although not particularly limited thereto, the pre-restored pictures after the current picture in the display order may be additionally included in reference picture list 0. Inversely, the pre-restored pictures before the current picture may also be additionally included in reference picture list 1.

In order to minimize a bit quantity consumed for encoding the motion information, various methods may be used.

For example, when the reference picture and the motion vector of the current block are the same as the reference picture and the motion vector of the neighboring block, information capable of identifying the neighboring block is encoded to deliver the motion information of the current block to the video decoding apparatus. Such a method is referred to as a merge mode.

In the merge mode, the inter predictor 124 selects a predetermined number of merge candidate blocks (hereinafter, referred to as a "merge candidate") from the neighboring blocks of the current block.

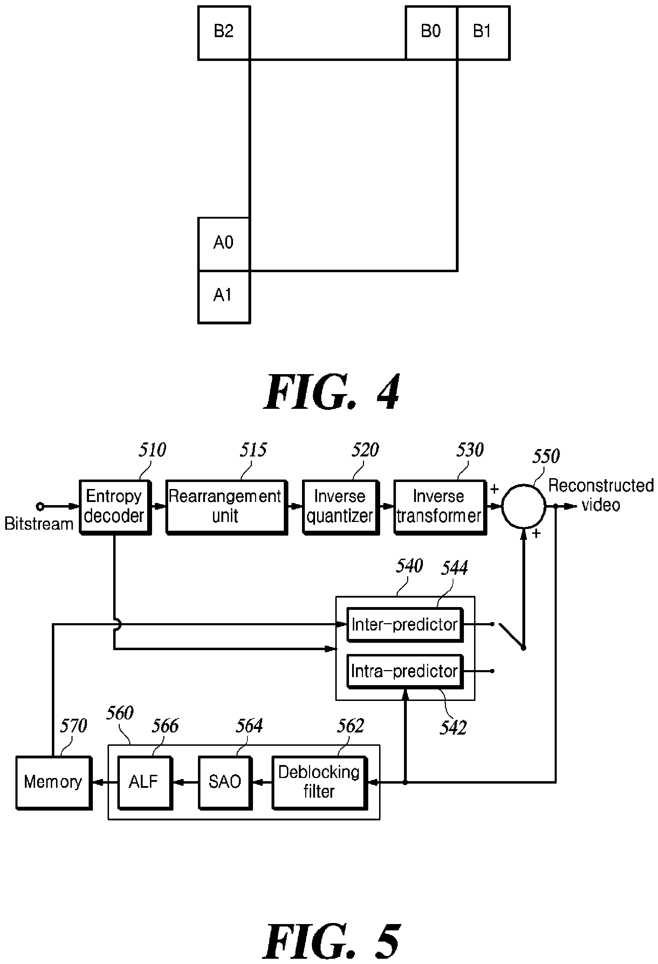

As a neighboring block for deriving the merge candidate, all or some of a left block A0, a bottom left block A1, a top block B0, a top right block B1, and a top left block B2 adjacent to the current block in the current picture may be used as illustrated in FIG. 4. Further, a block positioned within the reference picture (may be the same as or different from the reference picture used for predicting the current block) other than the current picture at which the current block is positioned may also be used as the merge candidate. For example, a co-located block with the current block within the reference picture or blocks adjacent to the co-located block may be additionally used as the merge candidate. If the number of merge candidates selected by the method described above is smaller than a preset number, a zero vector is added to the merge candidate.

The inter predictor 124 configures a merge list including a predetermined number of merge candidates by using the neighboring blocks. A merge candidate to be used as the motion information of the current block is selected from the merge candidates included in the merge list, and merge index information for identifying the selected candidate is generated. The generated merge index information is encoded by the entropy encoder 155 and delivered to the video decoding apparatus.

The merge skip mode is a special case of the merge mode. After quantization, when all transform coefficients for entropy encoding are close to zero, only the neighboring block selection information is transmitted without transmitting residual signals. By using the merge skip mode, it is possible to achieve a relatively high encoding efficiency for images with slight motion, still images, screen content images, and the like.

Hereafter, the merge mode and the merge skip mode are collectively referred to as the merge/skip mode.

Another method for encoding the motion information is an advanced motion vector prediction (AMVP) mode.

In the AMVP mode, the inter predictor 124 derives motion vector predictor candidates for the motion vector of the current block by using the neighboring blocks of the current block. As a neighboring block used for deriving the motion vector predictor candidates, all or some of a left block A0, a bottom left block A1, a top block B0, a top right block B 1, and a top left block B2 adjacent to the current block in the current picture illustrated in FIG. 4 may be used. Further, a block positioned within the reference picture (may be the same as or different from the reference picture used for predicting the current block) other than the current picture at which the current block is positioned may also be used as the neighboring block used for deriving the motion vector predictor candidates. For example, a co-located block with the current block within the reference picture or blocks adjacent to the co-located block may be used. If the number of motion vector candidates selected by the method described above is smaller than a preset number, a zero vector is added to the motion vector candidate.

The inter predictor 124 derives the motion vector predictor candidates by using the motion vector of the neighboring blocks and determines motion vector predictor for the motion vector of the current block by using the motion vector predictor candidates. In addition, a motion vector difference is calculated by subtracting motion vector predictor from the motion vector of the current block.

The motion vector predictor may be acquired by applying a pre-defined function (e.g., center value and average value computation, etc.) to the motion vector predictor candidates. In this case, the video decoding apparatus also knows the pre-defined function. Further, since the neighboring block used for deriving the motion vector predictor candidate is a block in which encoding and decoding are already completed, the video decoding apparatus may also already know the motion vector of the neighboring block. Therefore, the video encoding apparatus does not need to encode information for identifying the motion vector predictor candidate. Accordingly, in this case, information on the motion vector difference and information on the reference picture used for predicting the current block are encoded.

Meanwhile, the motion vector predictor may also be determined by a scheme of selecting any one of the motion vector predictor candidates. In this case, information for identifying the selected motion vector predictor candidate is additional encoded jointly with the information on the motion vector difference and the information on the reference picture used for predicting the current block.

The subtractor 130 generates a residual block by subtracting the prediction block generated by the intra predictor 122 or the inter predictor 124 from the current block.

The transformer 140 transforms residual signals in a residual block having pixel values of a spatial domain into transform coefficients of a frequency domain. The transformer 140 may transform residual signals in the residual block by using a total size of the residual block as a transform unit or also split the residual block into a plurality of subblocks and perform the transform by using the subblock as the transform unit. Alternatively, the residual block is divided into two subblocks, which are a transform area and a non-transform area, to transform the residual signals by using only the transform area subblock as the transform unit. Here, the transform area subblock may be one of two rectangular blocks having a size ratio of 1:1 based on a horizontal axis (or vertical axis). In this case, a flag (cu_sbt_flag) indicates that only the subblock is transformed, and directional (vertical/horizontal) information (cu_sbt_horizontal_flag) and/or positional information (cu_sbt_pos_flag) are encoded by the entropy encoder 155 and signaled to the video decoding apparatus. Further, a size of the transform area subblock may have a size ratio of 1:3 based on the horizontal axis (or vertical axis). In this case, a flag (cu_sbt_quad_flag) dividing the corresponding splitting is additionally encoded by the entropy encoder 155 and signaled to the video decoding apparatus.

Meanwhile, the transformer 140 may perform the transform for the residual block individually in a horizontal direction and a vertical direction. For the transform, various types of transform functions or transform matrices may be used. For example, a pair of transform functions for horizontal transform and vertical transform may be defined as a multiple transform set (MTS). The transformer 140 may select one transform function pair having highest transform efficiency in the MTS and transform the residual block in each of the horizontal and vertical directions. Information (mts_idx) on the transform function pair in the MTS is encoded by the entropy encoder 155 and signaled to the video decoding apparatus.

The quantizer 145 quantizes the transform coefficients output from the transformer 140 using a quantization parameter and outputs the quantized transform coefficients to the entropy encoder 155. The quantizer 145 may also immediately quantize the related residual block without the transform for any block or frame. The quantizer 145 may also apply different quantization coefficients (scaling values) according to positions of the transform coefficients in the transform block. A quantization matrix applied to transform coefficients quantized arranged in 2 dimensional may be encoded and signaled to the video decoding apparatus.

The rearrangement unit 150 may perform realignment of coefficient values for quantized residual values.

The rearrangement unit 150 may change a 2D coefficient array to a 1D coefficient sequence by using coefficient scanning. For example, the rearrangement unit 150 may output the 1D coefficient sequence by scanning a DC coefficient to a high-frequency domain coefficient by using a zig-zag scan or a diagonal scan. According to the size of the transform unit and the intra prediction mode, vertical scan of scanning a 2D coefficient array in a column direction and horizontal scan of scanning a 2D block type coefficient in a row direction may also be used instead of the zig-zag scan. In other words, according to the size of the transform unit and the intra prediction mode, a scan method to be used may be determined among the zig-zag scan, the diagonal scan, the vertical scan, and the horizontal scan.

The entropy encoder 155 generates a bitstream by encoding a sequence of 1D quantized transform coefficients output from the rearrangement unit 150 by using various encoding schemes including a Context-based Adaptive Binary Arithmetic Code (CABAC), an Exponential Golomb, or the like.

Further, the entropy encoder 155 encodes information such as a CTU size, a CTU split flag, a QT split flag, an MTT split type, an MTT split direction, etc., related to the block splitting to allow the video decoding apparatus to split the block equally to the video encoding apparatus. Further, the entropy encoder 155 encodes information on a prediction type indicating whether the current block is encoded by intra prediction or inter prediction. The entropy encoder 155 encodes intra prediction information (i.e., information on an intra prediction mode) or inter prediction information (in the case of the merge mode, a merge index and in the case of the AMVP mode, information on the reference picture index and the motion vector difference) according to the prediction type. Further, the entropy encoder 155 encodes information related to quantization, i.e., information on the quantization parameter and information on the quantization matrix.

The inverse quantizer 160 dequantizes the quantized transform coefficients output from the quantizer 145 to generate the transform coefficients. The inverse transformer 165 transforms the transform coefficients output from the inverse quantizer 160 into a spatial domain from a frequency domain to restore the residual block.

The adder 170 adds the restored residual block and the prediction block generated by the predictor 120 to restore the current block. Pixels in the restored current block may be used as reference pixels when intra-predicting a next-order block.

The loop filter unit 180 performs filtering for the restored pixels in order to reduce blocking artifacts, ringing artifacts, blurring artifacts, etc., which occur due to block based prediction and transform/quantization. The loop filter unit 180 as an in-loop filter may include all or some of a deblocking filter 182, a sample adaptive offset (SAO) filter 184, and an adaptive loop filter (ALF) 186.

The deblocking filter 182 filters a boundary between the restored blocks in order to remove a blocking artifact, which occurs due to block unit encoding/decoding, and the SAO filter 184 and the ALF 186 perform additional filtering for a deblocked filtered video. The SAO filter 184 and the ALF 186 are filters used for compensating differences between the restored pixels and original pixels, which occur due to lossy coding. The SAO filter 184 applies an offset as a CTU unit to enhance a subjective image quality and encoding efficiency. On the other hand, the ALF 186 performs block unit filtering and compensates distortion by applying different filters by dividing a boundary of the corresponding block and a degree of a change amount. Information on filter coefficients to be used for the ALF may be encoded and signaled to the video decoding apparatus.

The restored block filtered through the deblocking filter 182, the SAO filter 184, and the ALF 186 is stored in the memory 190. When all blocks in one picture are restored, the restored picture may be used as a reference picture for inter predicting a block within a picture to be encoded afterwards.

FIG. 5 is a functional block diagram of a video decoding apparatus that may implement the technologies of the present disclosure. Hereinafter, referring to FIG. 5, the video decoding apparatus and components of the apparatus are described.

The video decoding apparatus may include an entropy decoder 510, a rearrangement unit 515, an inverse quantizer 520, an inverse transformer 530, a predictor 540, an adder 550, a loop filter unit 560, and a memory 570.

Similar to the video encoding apparatus of FIG. 1, each component of the video decoding apparatus may be implemented as hardware or software or implemented as a combination of hardware and software. Further, a function of each component may be implemented as the software, and a microprocessor may also be implemented to execute the function of the software corresponding to each component.

The entropy decoder 510 extracts information related to block splitting by decoding the bitstream generated by the video encoding apparatus to determine a current block to be decoded and extracts prediction information required for restoring the current block and information on the residual signals.

The entropy decoder 510 determines the size of the CTU by extracting information on the CTU size from a sequence parameter set (SPS) or a picture parameter set (PPS) and splits the picture into CTUs having the determined size. In addition, the CTU is determined as a highest layer of the tree structure, i.e., a root node, and split information for the CTU may be extracted to split the CTU by using the tree structure.

For example, when the CTU is split by using the QTBTTT structure, a first flag (QT_split_flag) related to splitting of the QT is first extracted to split each node into four nodes of the lower layer. In addition, a second flag (mtt_split_flag), a split direction (vertical/horizontal), and/or a split type (binary/ternary) related to splitting of the MTT are extracted with respect to the node corresponding to the leaf node of the QT to split the corresponding leaf node into an MTT structure. As a result, each of the nodes below the leaf node of the QT is recursively split into the BT or TT structure.

As another example, when the CTU is split by using the QTBTTT structure, a CU split flag (split_cu_flag) indicating whether the CU is split is extracted. When the corresponding block is split, the first flag (QT_split_flag) may also be extracted. During a splitting process, with respect to each node, recursive MTT splitting of 0 times or more may occur after recursive QT splitting of 0 times or more. For example, with respect to the CTU, the MTT splitting may immediately occur or on the contrary, only QT splitting of multiple times may also occur.

As another example, when the CTU is split by using the QTBT structure, the first flag (QT_split_flag) related to the splitting of the QT is extracted to split each node into four nodes of the lower layer. In addition, a split flag (split_flag) indicating whether the node corresponding to the leaf node of the QT being further split into the BT, and split direction information are extracted.

Meanwhile, when the entropy decoder 510 determines a current block to be decoded by using the splitting of the tree structure, the entropy decoder 510 extracts information on a prediction type indicating whether the current block is intra predicted or inter predicted. When the prediction type information indicates the intra prediction, the entropy decoder 510 extracts a syntax element for intra prediction information (intra prediction mode) of the current block. When the prediction type information indicates the inter prediction, the entropy decoder 510 extracts information representing a syntax element for inter prediction information, i.e., a motion vector and a reference picture to which the motion vector refers.

Further, the entropy decoder 510 extracts quantization related information, and extracts information on the quantized transform coefficients of the current block as the information on the residual signals.

The rearrangement unit 515 may change a sequence of 1D quantized transform coefficients entropy-decoded by the entropy decoder 510 to a 2D coefficient array (i.e., block) again in a reverse order to the coefficient scanning order performed by the video encoding apparatus.

The inverse quantizer 520 dequantizes the quantized transform coefficients and dequantizes the quantized transform coefficients by using the quantization parameter. The inverse quantizer 520 may also apply different quantization coefficients (scaling values) to the quantized transform coefficients arranged in 2D. The inverse quantizer 520 may perform dequantization by applying a matrix of the quantization coefficients (scaling values) from the video encoding apparatus to a 2D array of the quantized transform coefficients.

The inverse transformer 530 generates the residual block for the current block by restoring the residual signals by inversely transforming the dequantized transform coefficients into the spatial domain from the frequency domain.

Further, when the inverse transformer 530 inversely transforms a partial area (subblock) of the transform block, the inverse transformer 530 extracts a flag (cu_sbt_flag) that only the subblock of the transform block is transformed, directional (vertical/horizontal) information (cu_sbt_horizontal_flag) of the subblock, and/or positional information (cu_sbt_pos_flag) of the subblock. The inverse transformer 530 also inversely transforms the transform coefficients of the corresponding subblock into the spatial domain from the frequency domain to restore the residual signals and fills an area, which is not inversely transformed, with a value of "0" as the residual signals to generate a final residual block for the current block.

Further, when the MTS is applied, the inverse transformer 530 determines the transform index or the transform matrix to be applied in each of the horizontal and vertical directions by using the MTS information (mts_idx) signaled from the video encoding apparatus. The inverse transformer 530 also performs inverse transform for the transform coefficients in the transform block in the horizontal and vertical directions by using the determined transform function.

The predictor 540 may include the intra predictor 542 and the inter predictor 544. The intra predictor 542 is activated when the prediction type of the current block is the intra prediction, and the inter predictor 544 is activated when the prediction type of the current block is the inter prediction.

The intra predictor 542 determines the intra prediction mode of the current block among the plurality of intra prediction modes from the syntax element for the intra prediction mode extracted from the entropy decoder 510. The intra predictor 542 also predicts the current block by using neighboring reference pixels of the current block according to the intra prediction mode.

The inter predictor 544 determines the motion vector of the current block and the reference picture to which the motion vector refers by using the syntax element for the inter prediction mode extracted from the entropy decoder 510.

The adder 550 restores the current block by adding the residual block output from the inverse transformer 530 and the prediction block output from the inter predictor 544 or the intra predictor 542. Pixels within the restored current block are used as a reference pixel upon intra predicting a block to be decoded afterwards.

The loop filter unit 560 as an in-loop filter may include a deblocking filter 562, an SAO filter 564, and an ALF 566. The deblocking filter 562 performs deblocking filtering a boundary between the restored blocks in order to remove the blocking artifact, which occurs due to block unit decoding. The SAO filter 564 and the ALF 566 perform additional filtering for the restored block after the deblocking filtering in order to compensate differences between the restored pixels and original pixels, which occur due to lossy coding. The filter coefficients of the ALF are determined by using information on filter coefficients decoded from the bitstream.

The restored block filtered through the deblocking filter 562, the SAO filter 564, and the ALF 566 is stored in the memory 570. When all blocks in one picture are restored, the restored picture may be used as a reference picture for inter predicting a block within a picture to be encoded afterwards.

The present disclosure in some embodiments relates to encoding and decoding video images as described above. More specifically, the present disclosure provides a video codec that, when processing a video block by using a deep learning model, generates a super block by stacking or packing the respective YUV video blocks and then inputs the generated super block into the deep learning model. The video codec processes the super block differently according to the characteristics of the YUV blocks constituting the super block in the process of performing convolution inside the deep learning model.

When applying deep learning technology to existing video coding frameworks such as in-loop filters, intra-prediction, inter-prediction, transform, and quantization, the entire video frame may be inputted into the deep learning model for processing. However, when applying deep learning technology on a per block, the present disclosure describes considerations in the process of block inputting, filtering processing, and outputting related to the deep learning model.

The following embodiments can be applied commonly to the parts of the video encoding device and the video decoding device that utilize deep learning technology.

### I. Convolutional Neural Network (CNN)

A CNN refers to a neural network composed of multiple convolutional layers and pooling layers and is a deep learning technology known to be best suited for image processing. The convolutional layer extracts a feature map by using multiple kernels or filters. The kernel coefficients that constitute the filter are the parameters that are determined during the learning process.

Among the convolutional layers of the CNN, the front layer, which is close to the input, extracts feature maps that respond to simple, low-level image features such as lines, points, or faces. Among the convolutional layers of the CNN, the back layer, which is close to the output, extracts feature maps that respond to higher-level features such as textures and object parts.

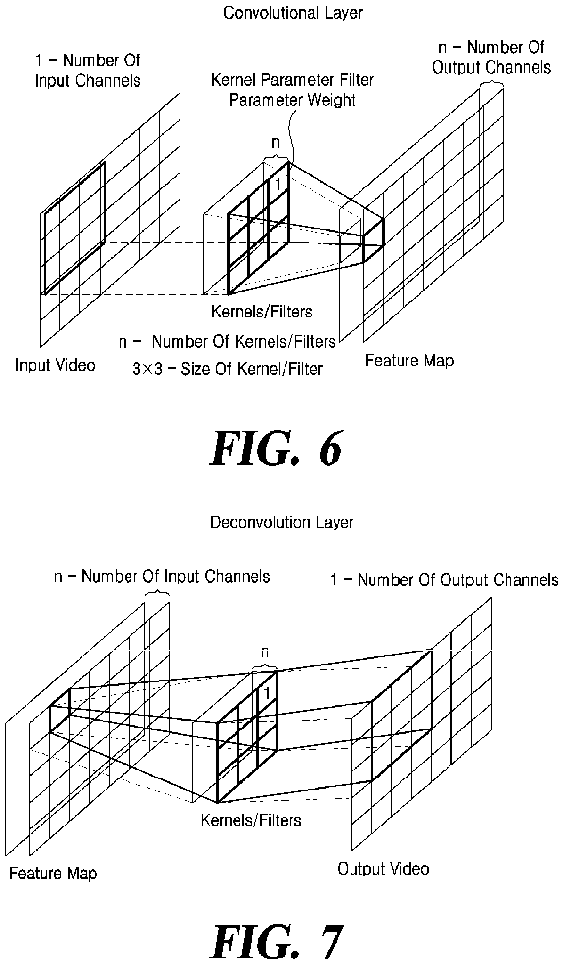

FIG. 6 is a diagram illustrating the operation of a convolutional layer according to at least one embodiment of the present disclosure.

The convolutional layer utilizes a convolutional operation to generate a feature map from the input image. The example of FIG. 6 depicts a kernel (or filter) with a kernel size of 3×3. The kernel size is also referred to as the filter size. The kernel has a kernel parameter or filter parameter, also referred to as a weight. The kernel illustrated in FIG. 6 has a total of nine kernel parameters. The kernel parameters may be initially set to random values, and their values may be updated based on training.

The convolution layer performs a convolution operation by using a block equivalent to the kernel size in the input image. In this case, the block equivalent to the kernel size in the input image is referred to as a window.

When filtering the input image is performed in a raster-scan order, the amount of the movement of the window is called a stride. In the example of FIG. 6, the stride is 1. If the stride is set to 2, the convolutional operation is performed by shifting the window by 2 samples, resulting in the horizontal and vertical dimensions of the feature map being half the horizontal and vertical dimensions of the input image.

As mentioned above, a convolutional layer may include a plurality of filters. The number of filters or the number of kernels is referred to as the number of channels, i.e., the number of channels is equal to the number of filters. The number of filters also determines the dimensionality of the feature map.

Padding refers to a method of expanding the input data by filling in a certain value around the input data before performing a convolutional operation. Padding is often used to control the spatial size of the output data. The value used for padding may be determined by hyperparameters, but zero-padding is commonly used. If no padding is used, the spatial size of the output data decreases with each pass through the convolutional layer, which can cause boundary information to be lost. Therefore, to avoid this issue, padding is used, i.e., padding can be used to equalize the spatial sizes of the convolutional layer's output data and input data.

FIG. 7 is a diagram illustrating the operation of a deconvolution layer according to at least one embodiment of the present disclosure.

The deconvolution layer performs the inverse operation of the convolution layer. A deconvolution layer generates a desired data image as an output from a feature map as an input. The deconvolution layer uses the same terminology as the convolution layer. When the stride is 1, the horizontal and vertical dimensions of the feature map are the same as the horizontal and vertical dimensions of the output data, as shown in the example in FIG. 7. For a stride of 2, the horizontal and vertical dimensions of the output data are twice the horizontal and vertical dimensions of the feature map.

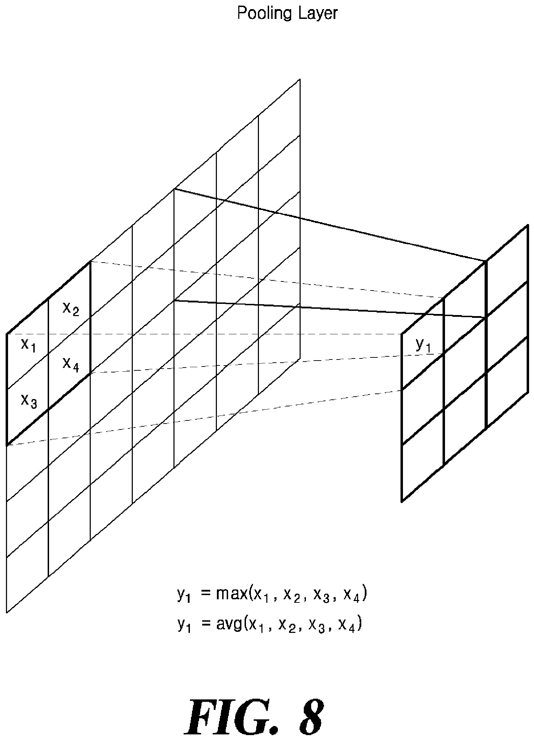

FIG. 8 is a diagram illustrating the operation of a pooling layer according to at least one embodiment of the present disclosure.

The pooling layer performs pooling, which is the process of subsampling the feature map generated by the convolutional layer. The pooling layer utilizes a 2×2 window to select samples such that the output is half the width and half the height of the input. In other words, the pooling layer is utilized to reduce the size of the input image or input feature map by condensing a 2×2 region into a single sample. As illustrated in FIG. 8, pooling methods include max pooling, which selects the maximum value in the 2×2 region, and include average pooling, which generates an average of the 2×2 region among others. Unlike a convolutional layer, a pooling layer does not include variables that need to be learned, and the number of channels in the input remains the same in the output.

The opposite of a pooling layer is defined as an unpooling layer. An unpooling layer serves to increase dimensionality as opposed to a pooling layer and is typically used after a deconvolution layer.

A convolutional encoder-decoder structure is a network structure composed of pairs of convolutional layers and deconvolutional layers. A convolutional encoder is composed of a convolutional layer and a pooling layer to output a feature map (or feature vector) from an input image. The final output vector of a convolutional encoder is also referred to as a latent vector. A convolutional decoder is composed of a deconvolution layer and an unpooling layer to generate an output image from the feature map or latent vector.

The inputs and outputs of the convolutional encoder-decoder may vary depending on the purpose of the application and network. For example, the inputs and outputs may be optical flow maps, saliency maps, image frames, etc.

### II. Block-wise Deep Learning Techniques

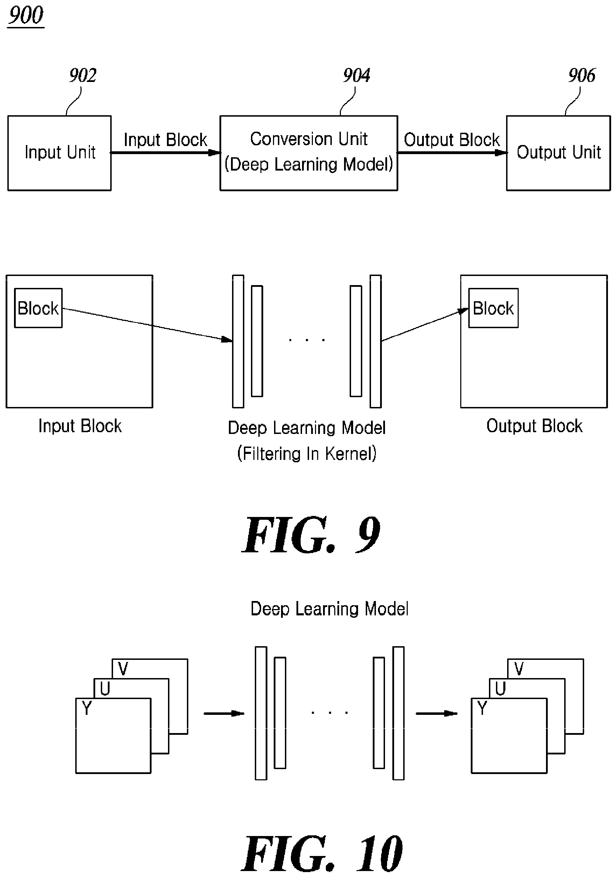

FIG. 9 is a block diagram conceptually illustrating a video block processing device according to at least one embodiment of the present disclosure.

The video block processing device 900 (hereinafter referred to as the "block processing device") according to the present disclosure can generate an output block from an input block by using a deep learning model. The block processing device 900 includes an input unit 902, a conversion unit 904, and an output unit 906 in whole or in part.

The input unit 902 obtains a video input block. Here, the video input block includes three channels, namely a Y block, a U block, and a V block. Further, the video input block may be a block that has the Y signal of the Y block, the U signal of the U block, and the V signal of the V block in a 4:2:0 or 4:4:4 format of the sampling rate. Therefore, the structure of the deep learning model also needs to be set to conform to these formats.

The input unit 902 generates input blocks by stacking or combining the video input blocks so that they are suitable for processing by the deep learning model included in the conversion unit 904.

On the other hand, when the deep learning model is applied to the Y signal only, the U and V signals are not considered.

The conversion unit 904 generates an output block from the input block by using filtering, i.e., convolutional operation, in the internal kernel of the deep learning model. Here, the deep learning model may be a CNN as described above and may perform operations within a conventional video coding framework, such as in-loop filter, intra-prediction, inter-prediction, transform, and quantization. Further, the deep learning model may be pre-trained to perform these tasks and may be shared between the video encoding device and the video decoding device.

The output unit 906 generates a transformed video block from the output block, referring to the method applied to the input block.

The following describes an example in which the input unit 902 organizes input blocks of a deep learning model differently depending on the YUV sampling rate. The input blocks may be input per CU, transform unit (TU), prediction unit (PU), or CTU basis, but are not necessarily limited thereto, and may have separate sizes utilized by the deep learning model.

The first to describe is a method of constructing an input block for a deep learning model from blocks in the YUV 4:2:0 format.

In the following description, the horizontal dimension of a Y block is denoted by W and its vertical dimension is denoted by H. In the 4:2:0 format, the width of the U and V blocks is W/2 and their length is H/2. Additionally, in the 4:4:4 format, U and V blocks are W wide and H tall. Thus, the Y block is a block of size W×H (hereinafter referred to as a "W×H block"), and the U and V blocks are blocks of size W/2×H/2.

FIG. 10 is a diagram illustrating a method of constructing an input block of a deep learning model, according to at least one embodiment of the present disclosure.

The input unit 902 may enlarge the U and V blocks to match the size of the Y block and then stack the Y block and the enlarged U and V blocks to generate a W×H×3 input block.

In the expression W×H×3, the last number represents the number of input channels. To enlarge the U and V blocks, the input unit 902 may utilize one of the following methods. Since the same method can be applied to both the U and V blocks, only the method for enlarging the U block is described below.

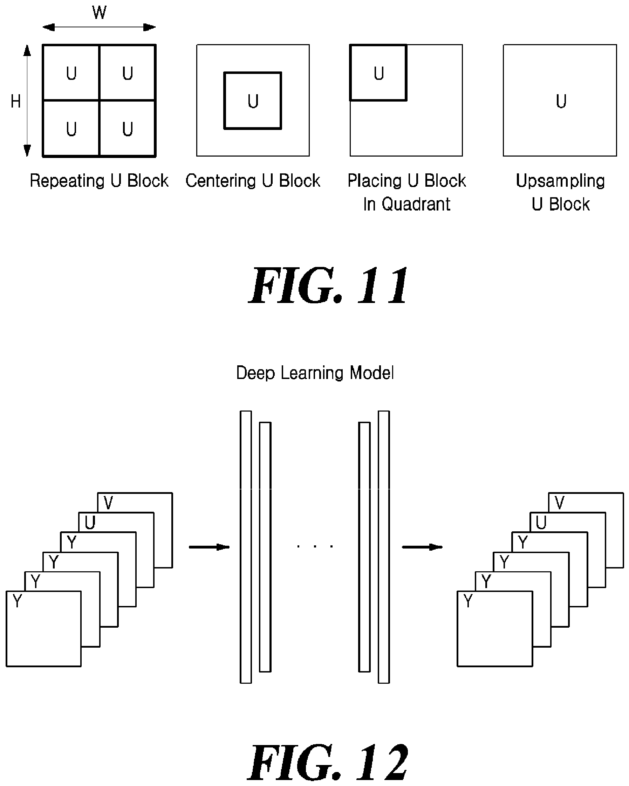

FIG. 11 is a diagram illustrating a method of enlarging a U block when constructing an input block, according to at least one embodiment of the present disclosure.

The input unit 902 may generate a W×H block by repeating the same U block 4 times. In repeating, the input unit 902 may combine the U-blocks by mirroring them up and down or left and right to reduce variation between the boundaries of the repeated blocks.

The input unit 902 may position the U block in the center of the W×H block. In this case, the input unit 902 may use some of the signals from the U block to pad around the U block. Alternatively, the input unit 902 may fill the periphery of the U block with the co-located Y block's values. Alternatively, the input unit 902 may pad around the U block with values from a previously encoded block. For example, in the case of inter prediction, the input unit 902 may fill around the U block with the values of the co-located block from the previous frame. Alternatively, the input unit 902 may fill the periphery of the U block with arbitrary pixel values.

The input unit 902 may position the U block in one of the quadrants of the W×H block, including the top left corner of the W×H block. At this time, the input unit 902 may utilize some of the signals from the U block to pad the remaining portion of the W×H block. Alternatively, the input unit 902 may fill the remaining portion of the W×H block with the values of the co-located Y block. Alternatively, the input unit 902 may fill the remaining portion of the W×H block with values from a previously encoded block. For example, in the case of inter prediction, the input unit 902 may fill the remaining portion of the W×H block with the values of the co-located block from the previous frame.

The input unit 902 may generate the W×H block by upsampling the U block. The input unit 902 may upsample the U block by utilizing a separate filter for upsampling or by repeating the same pixel twice.

FIG. 12 is a diagram illustrating a method of constructing an input block of a deep learning model, according to another embodiment of the present disclosure.

In another embodiment according to the present disclosure, the input unit 902 may quadrisect the size of the Y block to match the size of the U and V blocks, as illustrated in FIG. 12. In this case, the input unit 902 may stack the quartered blocks of the Y block with the U and V blocks to generate a W/2×H/2×6 input block.

The input unit 902 may divide the Y block into four quadrants to quadrisect the Y block.

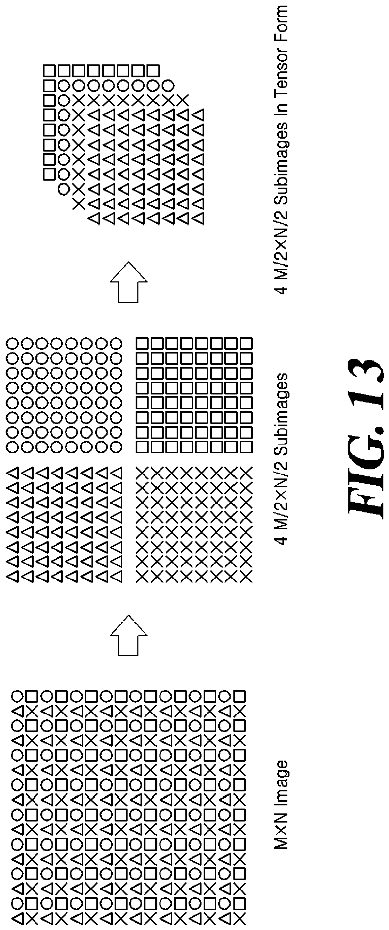

Alternatively, as illustrated in FIG. 13, the input unit 902 may quadrisect the Y block by decimating the samples constituting the Y block in the horizontal and vertical directions.

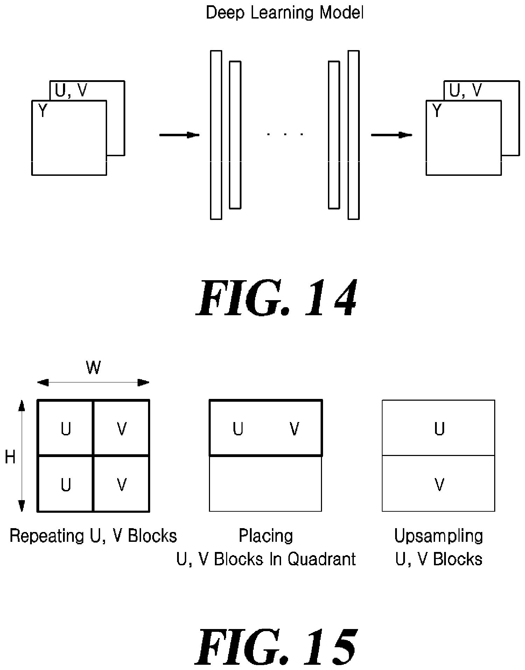

FIG. 14 is a diagram illustrating a method of constructing an input block of a deep learning model, according to another embodiment of the present disclosure.

In another embodiment according to the present disclosure, as illustrated in FIG. 14, the input unit 902 may generate an input block of W×H×2 by constructing a super block to match the size of the Y block by using the U and V blocks. At this time, the input unit 902 may utilize one of the following methods.

FIG. 15 is a diagram illustrating a method of constructing a super block when constructing an input block, according to another embodiment of the present disclosure.

The input unit 902 constructs a W×H super block by repeating the U, V blocks twice in a horizontal or vertical direction. To repeat the same blocks but reduce the variation between boundaries, the input unit 902 may combine blocks of the same chroma component by mirroring them up and down or left and right.

The input unit 902 may position the U and V blocks in each of the quadrants of the W×H block, including the top left corner of the W×H block. At this time, the input unit 902 may utilize some signals from the U, V blocks to pad the remaining portion of the W×H block. Alternatively, the input unit 902 may fill the remaining portion of the W×H block with the values of the co-located Y block. Alternatively, the input unit 902 may fill the remaining portion of the W×H block with previously encoded block's values. For example, in the case of inter prediction, the input unit 902 may fill the remaining portion of the W×H block with the co-located block's values from the previous frame.

The input unit 902 may combine the U, V blocks up and down and upsample the U, V blocks in a horizontal direction, or the input unit 902 may combine the U, V blocks left and right and upsample the U, V blocks in a vertical direction to generate the W×H block. At this time, the input unit 902 may utilize a separate filter for upsampling or may upsample the U, V blocks by repeating the same pixels twice.

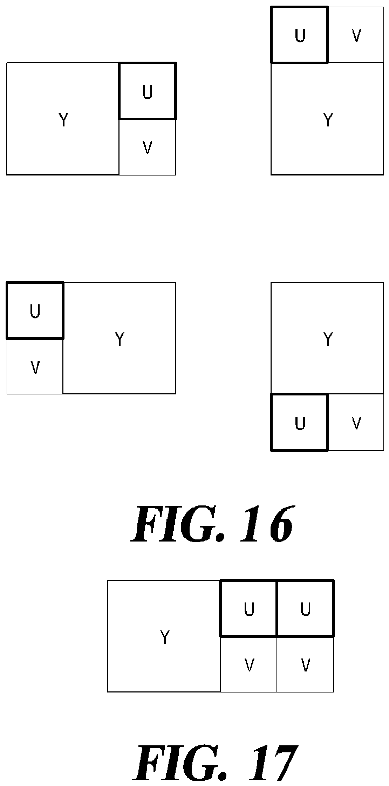

In other embodiments according to the present disclosure, the input unit 902 may utilize the Y, U, and V blocks to form a single super block. The input unit 902 may arrange the Y, U, and V blocks as illustrated in FIG. 16. For example, the input unit 902 may place the U and V blocks on the top, bottom, left, or right of the Y block.

In other embodiments according to the present disclosure, the size of the super block may be a power of two or a multiple of four. The input unit 902, as illustrated in FIG. 17, may construct a super block by adding each of the U and V blocks. To construct a super block, the same U block and the same V block may be repeated. To reduce variation between boundaries, the input unit 902 may combine blocks of the same chroma component by mirroring them up and down or left to right. Alternatively, the input unit 902 may upsample the U and V blocks.

The following describes a method of constructing an input block for a deep learning model from blocks in the YUV 4:4:4 format.

In the 4:4:4 format, the size of the U, V blocks is the same as the size of the Y block. Therefore, the input unit 902, as illustrated in FIG. 10, may generate a W×H×3 input block by stacking the U, V blocks with the Y blocks. Alternatively, the input unit 902 may combine the Y, U, and V blocks to generate a super block of size 3W×H.

The above description concerns a method of generating an input block when the conversion unit 904 includes a single deep learning model. The following describes a method of generating an input block when the conversion unit 904 includes two or more deep learning models.

The conversion unit 904 may process the Y, U, and V blocks by using three different deep learning models. At this time, the input unit 902 may generate the input block by using one of the following methods.

The input unit 902 may generate a W×H×1 input block from each of the Y, U, and V blocks to input the generated W×H×1 input block to the three deep learning models. For example, the input unit 902 may assign one deep learning model per input channel. In this case, as illustrated in FIG. 11, the input unit 902 may enlarge each of the U and V blocks to generate a W×H×1 input block. For the respective Y, U, and V blocks, the input unit 902 may stack the W×H×1 input block three times to transform the stack into a W×H×3 input block, which may then be inputted to the deep learning model.

The input unit 902 may generate a W×H×1 input block from the Y block and generate a W/2×H/2×1 input block from each of the U and V blocks. For example, the input blocks subject to processing by the deep learning model for processing the Y block are different in size from those subject to processing by the deep learning model for processing each of the U and V blocks. In this case, for the Y block, the input unit 902 may stack the W×H×1 input block three times to transform the stack into a W×H×3 input block, which can then be input to the deep learning model for processing the Y block. For each of the U and V blocks, the input unit 902 may stack the W/2×H/2×1 input blocks three times to transform the stack into a W/2×H/2×3 input block.

The input unit 902 may generate a W×H×3 input block from each of the Y, U, and V blocks to input to the three deep learning models. In this case, the input unit 902 may generate an input block for one neural network by stacking the same chroma component three times. In this way, the input unit 902 may utilize deep learning models set to fit the three input channels.

In another embodiment according to the present disclosure, the conversion unit 904 may utilize two different deep learning models to process the Y, U, and V blocks. The conversion unit 904 may utilize one deep learning model for processing the Y block (hereinafter referred to as a "Y-block deep learning model") and another deep learning model for processing the U, V blocks (hereinafter referred to as a "UV-block deep learning model"). At this time, the input unit 902 may generate the input blocks by using one of the following methods.

The input unit 902 may generate and input a W×H×1 input block from the Y block to the Y-block deep learning model. Further, the input unit 902 may stack the U and V blocks to generate a W/2×H/2×2 input block, which may then be inputted into the UV-block deep learning model.

In another embodiment, the input unit 902 may generate and input a W×H×1 input block from the Y block into the Y-block deep learning model. Further, the input unit 902 may stack the U and V blocks to generate a W×H×2 input block, which may then be inputted into the UV-block deep learning model. In this case, as illustrated in FIG. 11, the input unit 902 may enlarge each of the U and V blocks to generate a W×H×2 input block.

In yet another embodiment, the input unit 902 may generate and input a W×H×1 input block from the Y block into the Y-block deep learning model. Further, the input unit 902 may generate and input a super block from the U and V blocks to the UV-block deep learning model. In this case, as illustrated in FIG. 15, the input unit 902 may generate a W×H×1 input block by using the U, V blocks.

The following describes a process in which the conversion unit 904 performs a convolutional operation, i.e., filtering, by using a deep learning model. To perform a convolutional operation, the conversion unit 904 may pad samples around the input block, set a stride value, and filter the input block by using a kernel in the deep learning model according to a preset kernel size. The conversion unit 904 performs a convolution operation according to the input video block in consideration of the following. Further, the conversion unit 904 may combine the method of performing the convolutional operation with the method of generating one or more input blocks, as described above.

Compared to a conventional convolution operation involving padding by using zero padding, copying of surrounding samples, or mirroring of surrounding samples, the conversion unit 904 according to the present embodiment may pad the input block by considering one or more of the following methods depending on the prediction mode of the input block.

The first to describe is padding when the input block is an intra-prediction block.

The conversion unit 904 may pad the input block by using already encoded samples from the surrounding samples adjacent to the input block.

The conversion unit 904 may utilize, as padding samples, as many lines as used by conventional intra prediction. For example, for HEVC, the conversion unit 904 may utilize samples from one line at the top and on the left of the block, and for VVC, the conversion unit 904 may utilize samples from three lines at the top and on the left of the block (first, second, and fourth).

The conversion unit 904 may pad the samples after performing filtering on the boundary sample used by the intra prediction.

The conversion unit 904 may pad the samples without performing any filtering on the boundary samples used by the intra prediction.

The conversion unit 904 may not pad neighboring samples at CTU boundaries, slice boundaries, and virtual processing unit boundaries.

The conversion unit 904 may pad the top and left sides of the block by using neighboring samples and may pad the bottom and right sides of the block by copying or mirroring the values of the current block.

The following describes padding when the input block is an inter prediction block.

The conversion unit 904 may pad the input block by using already encoded samples from the surrounding samples adjacent to the input block.

The conversion unit 904 may pad the input block with samples from the co-located block in a previous frame that has already been encoded.

The conversion unit 904 may pad the input block with a sample of a reference prediction block obtained by using a motion vector from a previously encoded frame.

The conversion unit 904 may pad the samples after applying an interpolation filter used by the inter prediction.

The conversion unit 904 may pad the samples without applying the interpolation filter used by the inter prediction.

In addition to the top and left sides of the block, the conversion unit 904 may pad the bottom and right sides of the block.

With a 360-degree video, to pad the rightmost block of a frame, the conversion unit 904 may use the leftmost block in the same row. Additionally, to pad the lowermost block, the conversion unit 904 may use the uppermost block in the same column.

If padding is not feasible, 0 may be used as the padding value but is not limited to. For example, the conversion unit 904 may utilize a predetermined value as the padding value. For example, 2^{Bit-1} may be used as the padding value. Here, Bit represents the number of bits required to represent a video sample.

On the other hand, if one or more blocks constitute a super block, the conversion unit 904 may pad the boundary values between the mutual blocks.

The conversion unit 904 may use the same stride and the same kernel size to filter the input block by using the deep learning model. For example, the conversion unit 904 sets the stride to 1 or 2 and the kernel to 3, 5, or 7. However, without limitation, the conversion unit 904 may set the stride value and kernel size based on the block's size and chroma component as follows.

The conversion unit 904 may set the stride value differently depending on the size of the block. For example, the conversion unit 904 may set the stride to 2 for blocks with the top or left side sized 16 or more and may set the stride to 1 for blocks smaller than 16.

The conversion unit 904 may set the kernel size differently based on the size of the block. For example, the conversion unit 904 may set the kernel size to 5 for blocks with the top or left side sized 16 or more, and 3 for blocks smaller than 16.

The conversion unit 904 may set the stride value differently depending on the chroma component of the block. For example, the conversion unit 904 may set the stride for the Y block to 2 and the stride for the U and V blocks to 1. Conversely, the conversion unit 904 may set the stride of the Y block to 1 and the strides of the U, V blocks to 2.

The conversion unit 904 may set the kernel size differently depending on the chroma component of the block. For example, the conversion unit 904 may set the kernel size of the Y block to 5 and the kernel size of the U, V blocks to 3.

After padding the samples around the input block and setting the stride values, the conversion unit 904 may generate the output block by applying filter coefficients and a nonlinear activation function to the input block.

Meanwhile, the output unit 906 may generate each of the Y, U, and V blocks by applying, to the output block, the combining method applied to the input block, as described above.

In other embodiments according to the present disclosure, in addition to the pixel values of the Y, U, and V blocks, the block processing unit 900 may use, as input to the deep learning model, such additional information outputted along with the encoding of the Y, U, V blocks as a block partitioning structure, a quantization parameter, a prediction mode, temporal information of a reference block (e.g., a picture of count (POC)), and the like.

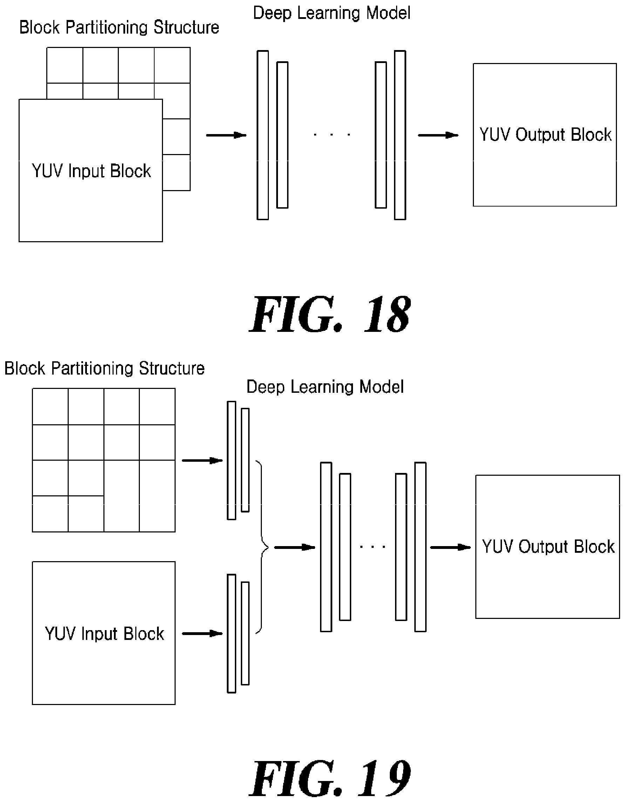

For example, when utilizing the block partitioning structure as additional information, the block processing unit 900 may cause a further increase in the dimensionality of the input channel by stacking the block partitioning structure in addition to the input method of the Y, U, and V blocks as described above. The block processing unit 900 may provide the YUV input blocks and the block partitioning structure as input to a deep learning model, as illustrated in FIG. 18. Alternatively, the block processing unit 900 may pack the YUV input blocks and the block partitioning structure to generate a super block which can then be provided as input to the deep learning model.

In another embodiment, the block processor 900 may input the additional information into another branch of the deep learning model. In the example of FIG. 19, the block processing unit 900 is inputting the block partitioning structure into another branch of the deep learning model.

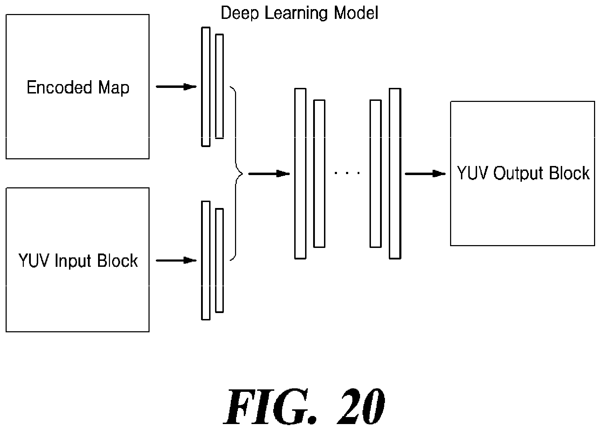

In another embodiment as illustrated in FIG. 20, the block processing unit 900 is inputting an encoded map into another branch of the deep learning model. In this case, the block processing unit 900 may utilize the following information as the encoded map.

The block processing unit 900 may use the quantization parameters as the encoded map. For example, the block processing device 900 may normalize the quantization parameters from the smallest to largest values to use and then scale them for use as an encoded map.

The block processor 900 may utilize the POC as an encoded map. The block processing unit 900 may use the difference in POC between the current block and the reference block as the encoded map.

The block processing unit 900 may utilize the intra prediction mode as an encoded map. The block processing unit 900 may use a value indicative of one of the intra prediction modes as an encoded map.

The block processing unit 900 may use the inter prediction mode as an encoded map. The block processing unit 900 may utilize a value indicative of one of the inter prediction modes as an encoded map.

In other embodiments according to the present disclosure, the block processing unit 900 may stack the YUV input blocks with the encoded map, similar to the manner illustrated in FIG. 18, and provide the stack as input to the deep learning model.

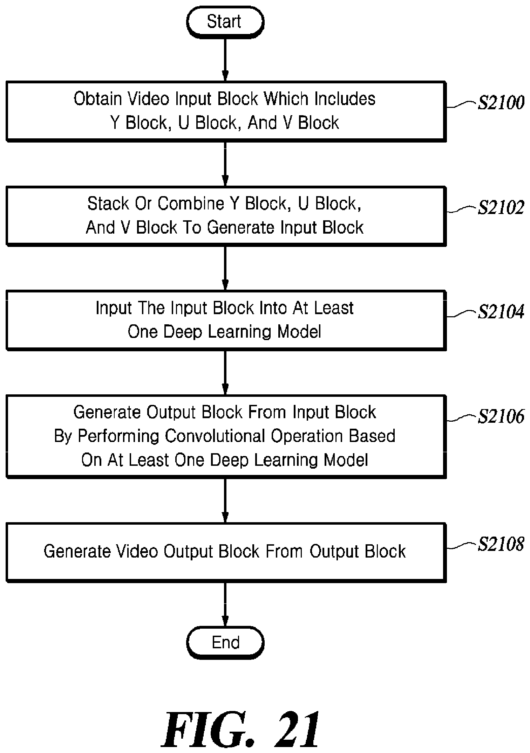

FIG. 21 is a flowchart of a method of processing a video block, according to at least one embodiment of the present disclosure.

The block processing unit 900 obtains a video input block (S2100). Here, the video input block includes three channels, namely a Y block, a U block, and a V block. Further, the video input block may be a block including the Y block, U block, and V block respectively having a Y signal, a U signal, and a V signal in a 4:2:0 or 4:4:4 format of the sampling rate.

The block processing unit 900 stacks or combines the Y block, U block, and V block to generate an input block (S2102).

The block processing unit 900 may construct the input block of the deep learning model in different ways depending on the YUV sampling rate. One may consult the examples of FIGS. 10 through 17 for how the block processing unit 900 constructs the input block of the deep learning model from blocks in YUV 4:2:0 format and YUV 4:4:4 format, so no further detailed description is provided.

The block processing unit 900 inputs the input block into at least one deep learning model (S2104). Here, the deep learning model may perform operations within an existing video coding framework, such as in-loop filter, intra prediction, inter prediction, transform, quantization, etc.

The block processing unit 900 performs a convolutional operation based on at least one deep learning model to generate an output block from the input block (S2106). To perform the convolutional operation, the block processing unit 900 may pad samples around the input block, set a stride value, and filter the input block by using a kernel in the deep learning model according to preset kernel size.

The block processing unit 900 generates a video output block from the output block (S2108). The block processing unit 900 may generate a converted video block from the output block by referring to the method applied to the input block.

Although the steps in the respective flowcharts are described to be sequentially performed, the steps merely instantiate the technical idea of some embodiments of the present disclosure. Therefore, a person having ordinary skill in the art to which this disclosure pertains could perform the steps by changing the sequences described in the respective drawings or by performing two or more of the steps in parallel. Hence, the steps in the respective flowcharts are not limited to the illustrated chronological sequences.

It should be understood that the above description presents illustrative embodiments that may be implemented in various other manners. The functions described in some embodiments may be realized by hardware, software, firmware, and/or their combination. It should also be understood that the functional components described in this specification are labeled by "... unit" to strongly emphasize the possibility of their independent realization.

Meanwhile, various methods or functions described in some embodiments may be implemented as instructions stored in a non-transitory recording medium that can be read and executed by one or more processors. The non-transitory recording medium may include, for example, various types of recording devices in which data is stored in a form readable by a computer system. For example, the non-transitory recording medium may include storage media such as erasable programmable read-only memory (EPROM), flash drive, optical drive, magnetic hard drive, and solid state drive (SSD) among others.

Although embodiments of the present disclosure have been described for illustrative purposes, those having ordinary skill in the art to which this disclosure pertains should appreciate that various modifications, additions, and substitutions are possible, without departing from the idea and scope of the present disclosure. Therefore, embodiments of the present disclosure have been described for the sake of brevity and clarity. The scope of the technical idea of the embodiments of the present disclosure is not limited by the illustrations. Accordingly, those having ordinary skill in the art to which this disclosure pertains should understand that the scope of the present disclosure is not to be limited by the above explicitly described embodiments but by the claims and equivalents thereof.

### [Reference Numerals]

900: video block processing device
902: input unit
904: conversion unit
906: output unit

### CROSS-REFERENCE TO RELATED APPLICATIONS

This application claims priority to Korean Patent Application No. 10-2020-0166450 filed on December 2, 2020, and Korean Patent Application No. 10-2021-0170547 filed on December 2, 2021, the entire disclosures of which are incorporated herein by reference.

## Claims

1. A method performed by a computing device for processing a video block based on a deep learning technology, the method comprising:
obtaining a video input block that includes a Y block, a U block, and a V block, which respectively have a Y signal, a U signal, and a V signal in a 4:2:0 or 4:4:4 format of sampling rate;
generating an input block by stacking or combining the Y block, the U block, and the V block;
inputting the input block to at least one deep learning model;
generating an output block from the input block by performing a convolutional operation based on at least one or more deep learning models; and
generating a video output block from the output block.

2. The method of claim 1, wherein generating the input block comprises:
when the Y signal, the U signal, and the V signal are in a 4:2:0 format,
enlarging the U block and the V block to match in size the Y block; and
stacking the Y block, an enlarged U block, and an enlarged V block.

3. The method of claim 2, wherein enlarging comprises:
enlarging the U block to match in size the Y block by repeating the U block 4 times through mirroring the U block up and down or left to right and combining four U blocks resulting from the mirroring.

4. The method of claim 2, wherein enlarging comprises:
centering the U block and then enlarging the U block to match in size the Y block by padding a periphery of the U block, while filling the periphery of the U block with values of the Y block co-located with the U block.

5. The method of claim 2, wherein enlarging comprises:
positioning the U block in one quadrant of the enlarged U block and then filling remaining quadrants of the enlarged U block with values of the Y block co-located with the U block.

6. The method of claim 1, wherein generating the input block comprises:
when the Y signal, the U signal, and the V signal are in a 4:2:0 format,
quadrisecting the Y block to match in size the U block; and
stacking the quadrisected Y blocks, the U block, and the V block.

7. The method of claim 6, wherein quadrisecting comprises:
decimating samples that constitute the Y block in horizontal and vertical directions to generate the quadrisected Y blocks.

8. The method of claim 1, wherein generating the input block comprises:
when the Y signal, the U signal, and the V signal are in a 4:2:0 format,
generating a super block that is equal in size to the Y block by using the U block and the V block; and
stacking the super block and the Y block.

9. The method of claim 8, wherein generating the super block comprises:
combining the U block and the V block up and down and then upsampling the U block and the V block in a horizontal direction, or combining the U block and the V block from side to side and then upsampling the U block and the V block in a vertical direction.

10. The method of claim 1, wherein generating the input block comprises:
when the Y signal, the U signal, and the V signal are in a 4:2:0 format, generating a super block by combining the Y block, the U block, and the V block.

11. The method of claim 1, wherein generating the input block comprises:
when the Y signal, the U signal, and the V signal are in a 4:4:4 format, generating the input block by stacking the Y block, the U block, and the V block.

12. The method of claim 1, wherein inputting the input block comprises:
utilizing three deep learning models; and
inputting each of the Y block, the U block, and the V block into each of the three deep learning models.

13. The method of claim 1, wherein inputting the input block comprises:
utilizing two deep learning models;
inputting the Y block into one deep learning model;
generating the input block by stacking the U block and the V block; and
then inputting the input block into a remaining deep learning model.

14. The method of claim 1, wherein inputting the input block comprises:
utilizing two deep learning models;
inputting the Y block into one deep learning model;
generating a super block by using the U block and the V block; and
then inputting the super block into a remaining deep learning model.

15. The method of claim 1, wherein generating the output block comprises, to perform the convolutional operation:
padding a periphery of the input block;
setting a stride value of the input block; and
filtering the input block by using a preset kernel.

16. The method of claim 15, wherein padding comprises:
when the input block is an intra predicted block, padding the input block with already encoded samples from among surrounding samples adjacent to the input block.

17. The method of claim 15, wherein padding comprises:
when the input block is an inter predicted block, padding the input block with samples of a co-located block in an already encoded previous frame.

18. The method of claim 15, wherein setting the stride value comprises:
setting the stride value of the input block based on a size or chroma component of the input block.

19. The method of claim 15, wherein the preset kernel has a kernel size that is set based on a size or chroma component of the input block.

20. The method of claim 1, further comprising:
inputting, besides the input block, additional information that is a block partitioning structure or an encoded map that is a quantization parameter, a picture order count (POC), or a prediction mode.

21. The method of claim 20, wherein inputting the additional information is responsive to the additional information being determined as the block partitioning structure for stacking the input block and the block partitioning structure and inputting a stack of the input block and the block partitioning structure to the deep learning model.

22. The method of claim 20, wherein inputting the additional information is responsive to the additional information being determined as the encoded map for stacking the input block and the encoded map and inputting a stack of the input block and the encoded map to the deep learning model.

23. An apparatus for processing a video block based on a deep learning technology, the apparatus comprising:
an input unit configured to obtain a video input block and to generate an input block by stacking or combining a Y block, a U block, and a V block that are included in the video input block and respectively have a Y signal, a U signal, and a V signal in a 4:2:0 or 4:4:4 format of sampling rate;
a conversion unit configured to generate an output block from the input block by performing a convolutional operation based on at least one or more deep learning models; and
an output unit configured to generate a video output block from the output block.
